# EUROPEAN PATENT SPECIFICATION

(11) **EP 4 345 749 B1**
(45) Date of publication and mention of the grant of the patent: **18.03.2026**
(21) Application number: 23197289.4
(22) Date of filing: 14.09.2023
(51) Int. Cl.: G06T 7/73, G06T 7/579

(54) **METHODS AND SYSTEMS FOR GENERATING AN ANNOTATED OPTIMISED POSE GRAPH**
VERFAHREN UND SYSTEME ZUR ERZEUGUNG EINES ANNOTIERTEN OPTIMIERTEN POSENGRAPHEN
PROCÉDÉS ET SYSTÈMES POUR GÉNÉRER UN GRAPHE DE POSE OPTIMISÉ ANNOTÉ

(30) Priority: 29.09.2022 GB 202214298
(43) Date of publication of application: 03.04.2024
(73) Proprietor: AUMOVIO Germany GmbH, 60488 Frankfurt am Main (DE)
(72) Inventor: Vaikundam, Sriram, Singapore 339780 (SG); Hoy, Michael Colin, Singapore 339780 (SG); Senarathne, Paththini Gedara Chaminda Namal, Singapore 339780 (SG); Singh, Rahul, Singapore 339780 (SG)
(74) Representative: Aumovio Corporation

(56) References cited:
- PULIGILLA SAI SHUBODH ET AL: "Topological Mapping for Manhattan-like Repetitive Environments", 2020 IEEE INTERNATIONAL CONFERENCE ON ROBOTICS AND AUTOMATION (ICRA), IEEE, 31 May 2020 (2020-05-31), pages 6268 - 6274, XP033826860, DOI: 10.1109/ICRA40945.2020.9197520
- GOEDDEL R ET AL: "Learning semantic place labels from occupancy grids using CNNs", IEEE/RSJ INTERNATIONAL CONFERENCE ON INTELLIGENT ROBOTS AND SYSTEMS (IROS,, 1 January 2016 (2016-01-01), XP002793122, DOI: 10.1109/IROS.2016.7759589
- ZHENG KAIYU ET AL: "From Pixels to Buildings: End-to-end Probabilistic Deep Networks for Large-scale Semantic Mapping", 2019 IEEE/RSJ INTERNATIONAL CONFERENCE ON INTELLIGENT ROBOTS AND SYSTEMS (IROS), IEEE, 3 November 2019 (2019-11-03), pages 3511 - 3518, XP033695195, DOI: 10.1109/IROS40897.2019.8967568

## Description

### TECHNICAL FIELD

The invention relates generally to data processing, and more specifically to methods and systems for processing pose graphs representative of a physical area and generating an optimised.

### BACKGROUND

Mobile agents such as robots and autonomous vehicles make extensive use of maps to navigate in diverse physical areas or environments. An example of a method of generating maps is simultaneous localization and mapping (SLAM), which is a method of constructing or updating a map of a physical area while simultaneously keeping track of an agent's location. Such maps are commonly represented as a pose graph, wherein the nodes of the graph correspond to a pose (or position) of an agent during mapping, and the edges that connect nodes represent relative pose, or spatial constraints between nodes.

Generally, mapping consists of two steps: graph construction and graph optimisation. Graph construction refers to the construction of the pose graph by taking raw sensor data and converting such sensor data to constraints (for example, this could include iterative closest point (ICP) based scan matching for lidar/depth data, and/or keypoint matching for image data). Graph optimisation refers to the optimisation of the pose graph to minimize the discrepancy between measurements and the constructed model of the physical area, and usually involves the optimisation and/or correction of nodes and edges, including the pose and other features embedded in the nodes. Pose graph optimization is typically done using a non-linear least-squares formulation to find a new configuration of the nodes in the graph that minimizes the squared error introduced by the constraints. However, pose graph optimisation is generally computationally expensive. A loop closure step is also generally required when mapping a physical area to remove redundancies corresponding to a common area of the physical area. However, it is difficult to search for and validate any potential loop closures.

Existing methods addressing the problems of mapping by generating hierarchical pose graphs comprising multiple layers of pose graphs which increasingly sparsity. Such hierarchical graphs are generated by grouping the nodes in clusters (or subgraphs) and generating a higher-level sparse graph comprising of representative nodes from each cluster or subgraph. Computational power is reduced as graph optimisation is performed only one level at a time, and loop closure may be identified by searching for correspondences between hierarchical subgraphs instead of analysing individual sensor measurements. The node clusters or subgraphs are usually created by heuristics, geometric or distance thresholds, or by using landmarks. For example, recent methods focus on extracting semantic information to generate subgraphs. In general, such methods require drastic changes in scene appearance and require the use of specific landmarks, such as doors, to generate accurate subgraphs, which restricts the use of such methods to indoor areas. These is because such methods generate cluster assignments that are inherently ambiguous as they are only clustered based on node feature similarity without consideration of the identity of the location or environment that the node is located in, which may result in the clustering of nodes that have similar features but are related to different locations. Furthermore, the existing methods of creating clusters or subgraphs only take into consideration spatial constraints or feature information, but not both, which may lead to improper segregation of clusters. Therefore, the graphs generated by existing methods may require another step to determine the type of location or environment that the node is related to before the graph can be used for subsequent applications, such as navigation which has different navigation policies for different locations or environments.

A pose graph-based topological mapping framework for an indoor warehouse setting is suggested in the study of Sai Shubodh Puligilla et al.: "Topological Mapping for Manhattan-like Repetitive Environments", 2020 IEEE International Conference on Robotics and Automation (ICRA), published 31 May 2020.

The use of CNNs to learn semantic place labels from 2D range data is demonstrated in the research of Robert Goeddel et al.: "Learning semantic place labels from occupancy grids using CNNs", 2016 IEEE/RSJ International Conference on Intelligent Robots and Systems (IROS), published 14 October 2016.

### SUMMARY

The invention is set out in the appended set of claims.

Embodiments of the present invention improve the optimisation of a received pose graph by taking into account both spatial constraints and feature information. The received pose graph comprises nodes which are associated with at least a sensor pose and at least one feature vector extracted from a corresponding sensor data. The nodes are linked by edges, which represent a relative pose between two sensors. In particular, a place category is predicted for each node of a received pose graph based at least on the sensor pose and the at least one feature vector associated for each node. The nodes and edges are then optimised based on their predicted place category. The nodes are annotated with a place category label corresponding with their predicted place category. In some embodiments, the optimization of the received pose graph may be carried out using a pre-trained machine learning model trained to receive a pose graph as input and to generate an annotated optimised pose graph as output. The generated optimised pose graph be used in various applications such as place categorization, topological mapping, and autonomous navigation.

It shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

To solve the above technical problems, the present invention provides a computer-implemented method of generating an optimised pose graph representative of a physical area:
receiving a pose graph representative of a physical area, the pose graph comprising a plurality of nodes and edges between the nodes, each node being associated at least with a sensor pose and at least one feature vector extracted from a corresponding sensor data, and wherein an edge connects pairs of nodes of the plurality of nodes and represents a relative pose;
predicting a place category for each node based at least on the sensor pose and at least one feature vector associated with such node;
optimising the pose graph based at least on the predicted place category; and
annotating each node with a place category label corresponding to the predicted place category to generate an annotated optimised pose graph.

The computer-implemented method of the present invention is advantageous over known methods as the resulting annotated optimised pose graph is generated based on place categories which takes into account feature information, graph topology, and density. **In** particular, nodes which have similar feature vector information and are proximal to each other would be assigned the same predicted place category. This results in a more accurate annotated optimised pose graph as compared to prior art which accounts for either spatial constraints or feature information only. Furthermore, the present invention uses place categorisation labels which are more accurate as compared to cluster assignments in prior art and may lead to reduced computational power and/or memory usage when used in subsequent applications such as mobile agent navigation, as an additional step of determining the type of location or environment that the node is related to is not required.

A preferred method of the present invention is a computer-implemented method as described above, wherein the received pose graph is generated by the steps of:
extracting at least one feature vector from sensor data capturing the physical area, preferably using a convolutional neural network, wherein the sensor data is generated by a sensor; and
encoding each node with the extracted at least one feature vector and sensor pose.

The above-described aspect of the present invention has the advantage that the received pose graph has both feature information and spatial information encoded, which then serves as input to predict a place category for each node. A convolutional neural network (CNN) is preferred for the extraction of feature vectors as a CNN may be able to extract informative features from the training data without the need for manual processing of the training data. The CNN may produce accurate results where large unstructured data is involved, such as image classification, speech recognition and natural language processing. Also, a CNN is computationally efficient as a CNN is able to assemble patterns of increasing complexity using the relatively small kernels in each hidden layer.

A preferred method of the present invention is a computer-implemented method as described above or as described above as preferred, wherein predicting a place category for each node comprises using a neural network and preferably using a multi-layer perceptron.

The above-described aspect of the present invention has the advantage that a neural network allows the learning and modelling of non-linear and complex relationships and subsequent application to new datasets or input. In addition, neural networks have the ability to learn by themselves and product an output that is not limited to the input provided. A multi-layer perceptron (MLP) is preferred as an MLP is structure agnostic and does not include any special assumptions to be made about the inputs, and therefore learns features from all combinations of the inputs.

The method of the present invention is a computer-implemented method as described above or as described above as preferred or described above as more preferred, wherein optimising the pose graph comprises:
for each predicted place category:
   selecting a representative node, wherein all other nodes are designated as child nodes;
   aggregating information from the child nodes to the selected representative node;
optimising the representative nodes, preferably using a neural network and more preferably using a graph neural network; and
optimising the child nodes based on their respective representative nodes, preferably using a neural network and more preferably using a multi-layer perceptron.

The above-described aspect of the present invention has the advantage that the optimisation of the nodes are carried out at different levels or hierarchies such that the optimisation process is more computationally efficient. A neural network is preferable for optimising the representative nodes and the child nodes as a neural network allows the learning and modelling of non-linear and complex relationships and subsequent application to new datasets or input. A graph neural network is more preferred for optimising the representative nodes as a GNN is able to capture the structure of the pose graph. A multi-layer perceptron (MLP) more preferred for optimising the as an MLP is structure agnostic and does not include any special assumptions to be made about the inputs, and therefore learns features from all combinations of the inputs.

The above-described advantageous aspects of a computer-implemented method of the invention also hold for all aspects of a below-described machine-learning model of the invention. All below-described advantageous aspects of a machine-learning model of the invention also hold for all aspects of an above-described computer-implemented method of the invention.

The invention also relates to a machine-learning model for generating an optimised pose graph representative of a physical area comprising nodes annotated with place category labels, in particular for use in the method of the invention, comprising:
a pooling neural network, preferably a multi-layer perceptron, configured to assign each node to a predicted place category;
a hierarchy module configured to select a representative node for each predicted place category, wherein all other nodes of each predicted place category are designated as child nodes, and aggregate information from child nodes to their respective representative nodes;
a representative node optimisation neural network, preferably a graph neural network configured to optimise the selected representative nodes;
a child node optimisation neural network, preferably a multi-layer perceptron, configured to optimise the child nodes based on their representative node; and
a node annotation module configured to annotate each node with a place category label corresponding to their predicted place category.

The machine-learning model of the present invention is advantageous as the machine-learning model is able to receive pose graphs as input and output an optimised pose graph, such optimisation carried out based feature information. The machine-learning model is also computationally light as place category prediction and pose graph optimisation are carried out with a single machine-learning model as opposed to prior art which uses separate methods for each task.

A preferred machine-learning model of the present invention is a machine-learning model as described above, wherein the hierarchy module comprises:
a representative node selection module configured to select a representative node for each place category, wherein all other nodes of each place category are designated as child nodes; and
an aggregation module configured to aggregate information from child nodes to their respective representative node.

The above-described aspect of the present invention has the advantage that splitting the hierarchy module into two modules allow for easier management, testing, implementation and designing. The aggregation module is also enabled to only aggregate the nodes from the child nodes as opposed to all the connected nodes.

The above-described advantageous aspects of a computer-implemented method or machine-learning model of the invention also hold for all aspects of a below-described computer-implemented method of the invention. All below-described advantageous aspects of a computer-implemented method of the invention also hold for all aspects of an above-described computer-implemented method or machine-learning model of the invention.

The invention also relates to a computer-implemented method of training a machine-learning model generating an annotated optimised posed graph based on a pose graph comprising a plurality of nodes and edges between the nodes, each node being associated at least with a sensor pose and at least one feature vector extracted from a corresponding sensor data, and wherein an edge connects pairs of nodes of the plurality of nodes and represents a relative pose, in particular a machine-learning model of the present invention, the method comprising:
receiving a training dataset comprising a plurality of pose graphs and corresponding ground truth pose graphs, wherein the ground truth pose graphs are optimised and each node of the ground truth pose graph is annotated with ground truth place category labels;
training a machine-learning model using the training dataset by:
   predicting a place category for each node based at least on the sensor pose and at least one feature vector associated with such node;
   generating an optimised pose graph based at least on the predicted place category;
   annotating each node with a place category label corresponding to the predicted place category to generate an annotated optimised pose graph; and
   adjusting the machine-learning model based on at least one loss function that enforces consistency between the generated annotated optimised pose graph and the ground truth pose graph.

The computer-implemented method of the present invention is advantageous as the neural network is trained through multiple iterations to accurately predict a place category for each node and to optimise node and edge placements by comparing the generated annotated optimised pose graph with a ground truth pose graph.

A preferred method of the present invention is a computer-implemented method as described above or as described above as preferred, wherein the at least one loss function is selected from the group comprising:
a categorisation loss function;
a pose error function; and
a triplet loss function.

The above-described aspect of the present invention has the advantage that each of the loss functions in the group measures the discrepancy of different aspects of the pose graph.

A preferred method of the present disclosure is a computer-implemented method as described above or as described above as preferred, wherein the at least one loss function is a cumulative loss function comprising a categorisation loss function, a pose error function, and a triplet loss function.

The above-described aspect of the present invention has the advantage that using a cumulative loss function would enhance the method of training of the machine-learning model as the different learning objectives captured by each of the loss functions listed are mutually reinforcing. The effect of each loss function may also be enhanced or limited depending on the requirements of the user. This would also be particularly advantageous in cases where limited training data may be available.

The above-described advantageous aspects of a computer-implemented method or machine-learning model of the invention also hold for all aspects of a below-described computer-implemented method of the invention. All below-described advantageous aspects of a computer-implemented method of the invention also hold for all aspects of an above-described computer-implemented method or a machine-learning model of the invention.

The invention also relates to a computer-implemented method of generating a training dataset for a neural network, in particular the machine-learning model of the computer-implemented method of the invention, comprising:
receiving a plurality of pose graphs, wherein each pose graph comprises a plurality of nodes and edges between the nodes, each node being associated at least with a sensor pose and at least one feature vector extracted from a corresponding sensor data, and wherein an edge connects pairs of nodes of the plurality of nodes and represents a relative pose;
generating ground truth pose graphs for each of the plurality of pose graphs by:
   optimising the plurality of pose graphs, preferably using a non-linear least-squares formula; and
   annotating each node with a ground truth place category label, preferably based on manual annotation, a neural network, or infrastructure data,
wherein the training dataset comprises the received plurality of pose graphs and the generated ground truth pose graphs.

The computer-implemented method of the present invention has the advantage that the training dataset generated by the computer-implemented method comprises optimised pose graphs with nodes annotated with place category labels which may then be used to train a machine-learning model to optimise a pose graph and predict a place category for each node of the pose graph.

The above-described advantageous aspects of a computer-implemented method or machine-learning model of the invention also hold for all aspects of a below-described training dataset of the invention. All below-described advantageous aspects of a training dataset of the invention also hold for all aspects of an above-described computer-implemented method or machine-learning model of the invention.

The invention also relates to a training dataset for a machine-learning model, in particular the machine-learning model of the invention, generated using a computer-implemented method of the invention.

The above-described advantageous aspects of a computer-implemented method, machine-learning model, or training dataset of the invention also hold for all aspects of below-described uses of an optimised pose graph generated according to a computer-implemented method of the invention. All below-described advantageous aspects of uses of an optimised pose graph generated according to a computer-implemented method of the invention also hold for all aspects of an above-described computer-implemented method, machine-learning model, or training dataset of the invention.

The invention also relates to use of an annotated optimised pose graph generated according to a computer-implemented method of the invention for at least one of: place categorisation; topological mapping; and autonomous navigation.

The above-described advantageous aspects of a computer-implemented method, machine-learning model, training dataset, or an optimised pose graph generated according to a computer-implemented method of the invention also hold for all aspects of below-described data processing system of the invention. All below-described advantageous aspects of a data processing system of the invention also hold for all aspects of an above-described computer-implemented method, machine-learning model, training dataset, or an optimised pose graph generated according to a computer-implemented method of the invention.

The invention also relates to a data processing system comprising a sensor and means for performing the steps of a computer-implemented method according to the invention, wherein the data processing system is preferably a mobile agent.

The above-described advantageous aspects of a computer-implemented method, machine-learning model, training dataset, data processing system, or an optimised pose graph generated according to a computer-implemented method of the invention also hold for all aspects of below-described computer program, a machine-readable storage medium, or a data carrier signal of the invention. All below-described advantageous aspects of a computer program, a machine-readable storage medium, or a data carrier signal of the invention also hold for all aspects of an above-described computer-implemented method, machine-learning model, training dataset, data processing system, or an optimised pose graph generated according to a computer-implemented method of the invention.

The invention also relates to a computer program, a machine-readable storage medium, or a data carrier signal that comprises instructions, that upon execution on a data processing device and/or control unit, cause the data processing device and/or control unit to perform the steps of a computer-implemented method according to the invention. The machine-readable medium may include any medium and/or mechanism for storing or transmitting information in a form readable by a machine (e.g., a computing device). The machine-readable medium may be any medium, such as for example, read-only memory (ROM); random access memory (RAM); a universal serial bus (USB) stick; a compact disc (CD); a digital video disc (DVD); a data storage device; a hard disk; electrical, acoustical, optical, or other forms of propagated signals (e.g., digital signals, data carrier signal, carrier waves), or any other medium on which a program element as described above can be transmitted and/or stored.

As used in this summary, in the description below, in the claims below, and in the accompanying drawings, the term "pose" refers to the position and orientation of a sensor or a mobile agent on which the sensor is mounted when sensor data of a physical area is captured. "Absolute pose" refers to the position and orientation of a sensor with respect to a reference coordinate frame, while "relative pose" refers to the position and orientation of a sensor or mobile agent on which the sensor is mounted with respect to the same sensor or same mobile agent at a previous time stamp, or another sensor.

As used in this summary, in the description below, in the claims below, and in the accompanying drawings, the term "sensor" includes any sensor that detects or responds to some type of input from a perceived environment or scene. Examples of sensors include cameras, video cameras, LiDAR sensors, radar sensors, depth sensors, light sensors, colour sensors, or red, green, blue, and distance (RGBD) sensors. The sensor may be stationary or may be mounted on any mobile agent, such as a robot or autonomous vehicle.

As used in this summary, in the description below, in the claims below, and in the accompanying drawings, the term "sensor data" means the output or data of a device, also known as a sensor, that detects and responds to some type of input from the physical environment. An example of sensor data is an RGB (red, green, blue) image.

As used in this summary, in the description below, in the claims below, and in the accompanying drawings, the term "pose graph" refers to a map-based data structure that represents a physical area or environment. A pose graph comprises nodes and edges, wherein each node is associated with at least a sensor pose and at least one feature vector extracted from a corresponding sensor data. The nodes are linked by edges, which represent a relative pose between two sensors.

As used in this summary, in the description below, in the claims below, and in the accompanying drawings, the term "feature vector" in general relates to a vector in multidimensional space which has been designed by a neural network during training, wherein the neural network receives sensor data as input and processes such input sensor data for identification or classification. Such feature vectors usually describe the visual features which the neural network has experienced as most useful during training. An example of feature vector is appearance vector, which describes the visual appearance of, for example an object in the sensor data which was processed by the neural network. The input sensor data may be any input sensor data, including image data, RGBD data, or lidar data.

As used in this summary, in the description below, in the claims below, and in the accompanying drawings, the term "mobile agent" in general relates to any autonomous mobile robot or vehicle capable of any type of manoeuvring movement, including diving, flying, swimming, and/or driving.

### BRIEF DESCRIPTION OF THE DRAWINGS

These and other features, aspects, and advantages will become better understood with regard to the following description, appended claims, and accompanying drawings where:
Fig. 1 is a high-level illustration of a method of generating an annotated optimised pose graph representative of a physical area, in accordance with embodiments of the present disclosure;
Fig. 2 is a schematic illustration of a method of generating an optimised pose graph representative of a physical area, in accordance with embodiments of the present disclosure;
Fig. 3 is a schematic illustration of a method of optimising the pose graph based at least on the predicted place category, in accordance with embodiments of the present disclosure;
Fig. 4 is a functional block diagram of a machine-learning model 400 for generating an annotated optimised pose graph representative of a physical area, in accordance with embodiments of the present disclosure;
Fig. 5 is a schematic diagram illustrating the main steps to train a machine learning model for generating an annotated optimised posed graph based on a pose graph, in accordance with embodiments of a present disclosure;
Fig. 6 is a schematic illustration of a method of generating a training dataset for training a machine-learning model 400 for generating an annotated optimised pose graph based on a pose graph, in accordance with embodiments of a present disclosure; and
Fig. 7 is a schematic illustration of the use of the annotated optimised pose graph by one or more mobile agents, in accordance with embodiments of the present disclosure.

In the drawings, like parts are denoted by like reference numerals.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the summary above, in this description, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

In the present document, the word "exemplary" is used herein to mean "serving as an example, instance, or illustration." Any embodiment or implementation of the present subject matter described herein as "exemplary" is not necessarily be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the disclosure.

The present disclosure is directed to methods, data processing systems, machine-learning models, methods of training machine-learning models, training datasets, computer programs, data carrier signals, for generating an annotated optimised pose graph representative of a physical area. The method may be performed on pose graphs comprising a plurality of nodes and edges between the nodes, each node being associated at least with a sensor pose and at least one feature vector extracted from a corresponding sensor data, and wherein an edge connects pairs of nodes of the plurality of nodes and represents a relative pose. The annotated optimised pose graph representative generated comprises optimised nodes and edges, with nodes that are annotated with a place category label which may be used for various applications such as place categorisation, topological mapping, and autonomous navigation. Embodiments of the present disclosure can utilise trained neural network(s) for the generation of annotated optimised pose graphs.

The following description sets forth exemplary methods, parameters, and the like. It should be recognized, however, that such description is not intended as a limitation on the scope of the present disclosure but is instead provided as a description of exemplary embodiments.

The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. The terms "comprises", "comprising", "includes" or any other variations thereof, are intended to cover a non-exclusive inclusion, such that a setup, device or method that includes a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method. It must also be noted that as used herein and in the appended claims, the singular forms "a," "an," and "the" include plural references unless the context clearly dictates otherwise.

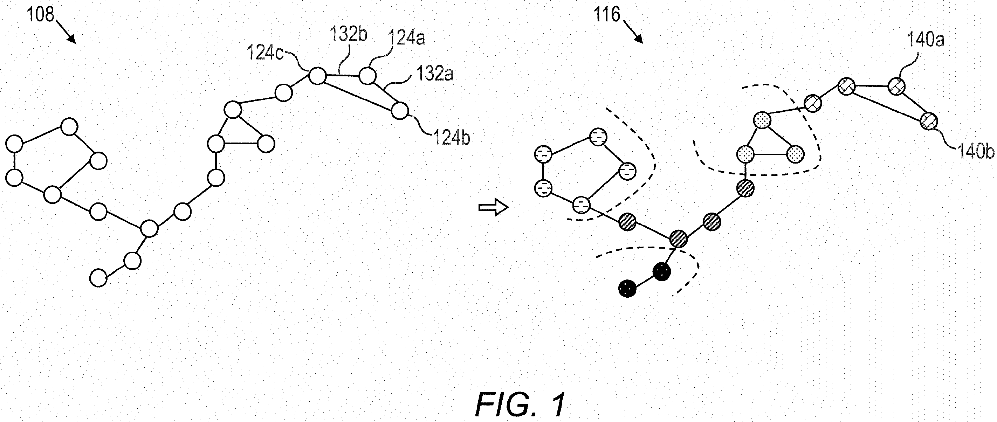

Fig. 1 is a high-level illustration of a method of generating an annotated optimised pose graph representative of a physical area, in accordance with embodiments of the present disclosure. The method of generating an annotated optimised pose graph representative of a physical area comprises the receipt of a pose graph 108 representative of the physical area to generate an annotated optimised pose graph 116 representative of the physical area. Pose graph 108 comprises a plurality of nodes 124 and edges 132, wherein an edge 132 connects pairs of nodes 124 of the plurality of nodes 124. Each node 124 may be connected to any number of nodes 124. For example, node 124a is connected to two other nodes: node 124b through edge 132a and node 124c through edge 132b.

According to some embodiments, each node 124 may be associated with a sensor pose within the physical area. The sensor pose may be represented with any number of degrees of freedom. In some embodiments, the sensor pose may be expressed as a 6D pose or a 7D pose. In some embodiments, each node 124 may be associated with at least one feature vector extracted from a corresponding sensor data captured by the sensor at the sensor pose associated with the node. In some embodiments, the sensor data may be an RGB data, RGBD data, lidar data or radar data. In some embodiments, edge 132 may represent a relative pose. For example, edge 132a may represent a relative pose between the sensor pose at node 124a and the sensor pose at node 124b.

According to some embodiments, the received pose graph may be generated by extracting at least one feature vector from sensor data capturing the physical area, wherein the sensor data is generated by a sensor, and encoding each node with the extracted at least one feature vector and sensor pose. Preferably, the at least one feature vector may be extracted from sensor data using a convolutional neural network (CNN). A convolutional neural network (CNN) is a multi-layered feed-forward neural network, made by stacking many hidden layers on top of each other in sequence. The sequential design may allow CNNs to learn hierarchical features. The hidden layers are typically convolutional layers followed by activation layers, some of them followed by pooling layers. The CNN may be configured to identify pattens in data. The convolutional layer may include convolutional kernels that are used to look for patterns across the input data. The convolutional kernel may return a large positive value for a portion of the input data that matches the kernel's pattern or may return a smaller value for another portion of the input data that does not match the kernel's pattern. A CNN is preferred as a CNN may be able to extract informative features from the training data without the need for manual processing of the training data. Also, CNN is computationally efficient as a CNN is able to assemble patterns of increasing complexity using the relatively small kernels in each hidden layer. The CNN outputs feature maps which may be linearised into feature vector(s) to be encoded into node 124. In some embodiments, the at least one feature vector may be extracted from an intermediate layer of the CNN with a dimension of 1024D. In some embodiments, the at least one feature vector may be extracted from any of the fully connected layers of the CNN. Examples of CNNs that may be employed to extract the at least one feature vector include ResNet50 and VGG-16. An example of ResNet 50 may be found in "Deep Residual Learning for Image Recognition" by He *et. al.,* wherein an example of the architecture of ResNet may be found at least in Section 4.1 and the column with the name 50-layer in Table 1 which illustrates a 50-layer residual network, and an example of the training of ResNet may be found at least at Section 3.4. For example, the at least one feature vector may be extracted from one of the layers with the layer name "conv4_x" or "conv5_x" in the 50-layer ResNet illustrated in Table 1 of the paper by He *et. al.* An example of VGG16 may be found in "Very Deep Convolutional Networks for Large-Scale Image Recognition" by Simonyan and Zisserman, wherein an example of the architecture of VGG-16 may be found at least in Section 2.1 and column D of Table 1, and an example of the training of VGG-16 may be found at least in Section 3.1. For example, the at least one feature vector may be extracted from one of the layers labelled "FC-4096" in Table 1 of the paper by Simonyan and Zisserman. It is contemplated that any other suitable architecture and/or training method may be employed. In some embodiments, the CNN used to extract the at least one feature vector may be trained on a dataset comprising labelled images of both indoor and outdoor scenes, wherein the images capture a wide variety of objects ranging from animals and indoor objects to cars, bicycles and pedestrians. Examples of datasets that may be used to train the CNN include the Imagenet dataset available at https://image-net.org/index, the Cityscapes dataset available at https://www.cityscapes-dataset.com/, the KITTI dataset available at https://www.cvlibs.net/datasets/kitti/, and the COCO dataset available at https://cocodataset.org/#home. It is contemplated that any other suitable dataset may be used.

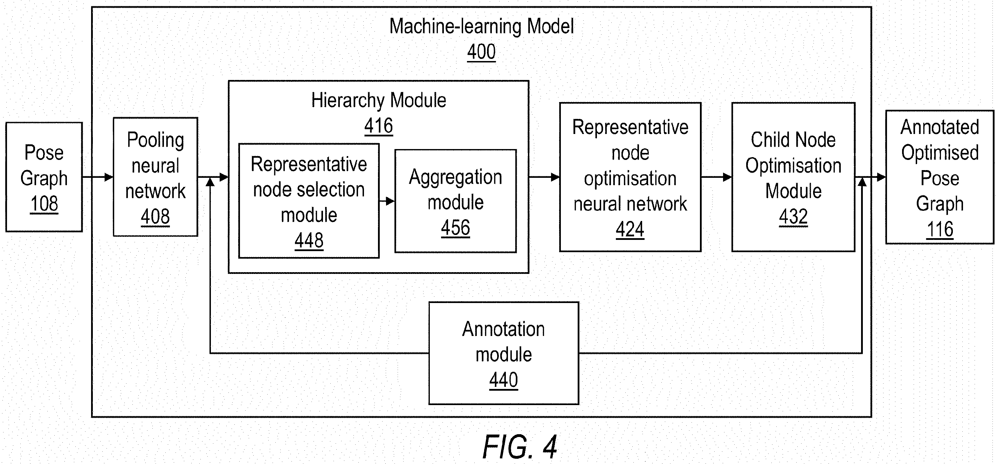

The at least one feature vector and sensor pose are embedded in node 124 by concatenation or learned embedding to aggregate the at least one feature vector and the sensor pose. Concatenation comprises the combining of the at least one feature vector and the sensor pose to a single matrix. For example, a 1024D feature vector and 7D sensor pose may be concatenated to generate a 1031D matrix. Learned embedding comprises a single fully connected layer which generates an output embedding that is used for each node and may be learnt jointly with machine-learning model 400 (see Fig. 4).

According to some embodiments, the annotated optimised pose graph 116 generated by method 100 may comprise a plurality of annotated nodes 140, wherein each annotated node 140 is annotated with a place category label. Examples of place category labels include lobby, pedestrian crossing, sidewalk, bus stop, building, traffic junction, etc. In some embodiments, the place category labels may be automatically or manually defined. The annotated nodes 140 are patterned in the diagrams for visualisation purposes only, wherein annotated nodes 140 annotated with the same place category are visualised with the same pattern. Each annotated node 140 of the annotated optimised pose graph 116 corresponds to a node 124 of pose graph 108. For example, annotated node 140a in annotated optimised pose graph 116 corresponds to node 124a of pose graph 108, and annotated node 140b in annotated optimised pose graph 116 corresponds to node 124b of pose graph 108. In some embodiments, the node position, associated sensor pose, associated at least one feature vector may be optimised and changed between node 124 and its corresponding annotated node 140. In some embodiments, the node position, associated sensor pose, associated at least one feature vector may remain the same between node 124 and its corresponding annotated node 140.

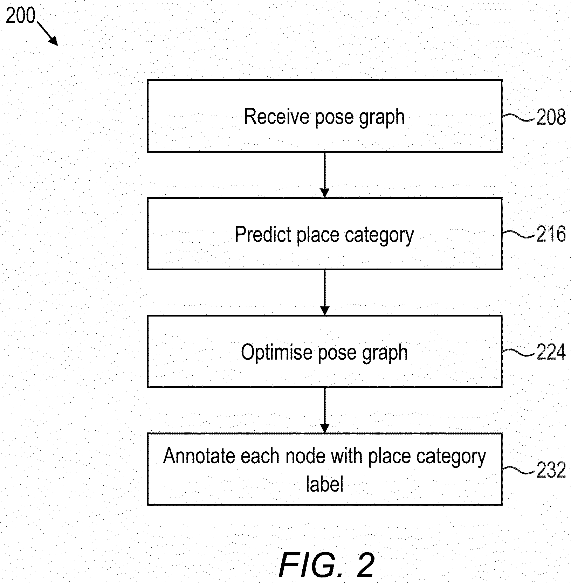

Fig. 2 is a schematic illustration of a method of generating an optimised pose graph representative of a physical area, in accordance with embodiments of the present disclosure. Method 200 of generating an optimised pose graph representative of a physical area may be implemented by any architecture and/or computing system. For example, various architectures employing, for example, multiple integrated circuit (IC) chips and/or packages, and/or various computing devices and/or consumer electronic (CE) devices such as multifunction devices, tablets, smart phones, etc., may implement the techniques and/or arrangements described herein.

According to some embodiments, method 200 may commence at step 208 wherein a pose graph 108 representative of a physical area is received. The pose graph 108 may be received by manner of one or both of wired or wireless coupling or communication. In some embodiments, the pose graph 108 may be received through a communication network. In other embodiments, the pose graph 108 may be stored on one or more remote storage devices, and the pose graph 108 may be retrieved from such remote storage device, or a cloud storage site, through one or both of wired or wireless connection.

According to some embodiments, method 200 may comprise step 216 wherein a place category is predicted for each node 124 based at least on the sensor pose and at least one feature vector associated with such node. In some embodiments, the prediction of a place category may comprise assigning each node 124 to a cluster corresponding to each place category. In some embodiments, the number of clusters may be implemented as a hyperparameter. In some embodiments, the number of clusters may be based on the number of place categories. In some embodiments, the number of clusters may be selected based on the number of subgraphs required. In some embodiments, prediction of place category may be carried out using a neural network. In some embodiments, prediction of place category may be carried out using a multi-layer perception. In some embodiments, prediction of place category may be carried out by a pooling neural network 408 (see Fig. 4).

According to some embodiments, method 200 may comprise step 224 wherein the pose graph is optimised based at least on the place category predicted in step 216. In some embodiments, optimising the pose graph may comprising adjusting the node position, sensor pose, edges, at least one feature vector and/or the predicted place category. In some embodiments, optimisation may be carried out on the entire pose graph. In some embodiments, optimisation may be carried out hierarchically on the pose graph.

According to some embodiments, method 200 may comprise step 232 wherein each node 124 is annotated with a place category label corresponding to the predicted place category. Each node 124 may be annotated at any appropriate step of method 200. Although Fig. 2 depicts step 232 as occurring after step 224, it is contemplated that step 232 of node annotation may be carried out between step 216 and step 224, or after step 224. In some embodiments, each node 124 may be annotated at step 216 after a place category has been predicted for the node. In some embodiments, each node 124 may be annotated after step 224 after the pose graph has been optimised.

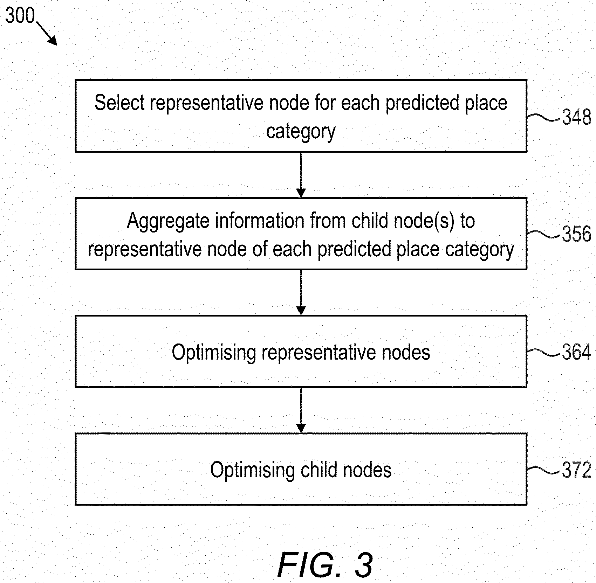

Fig. 3 is a schematic illustration of a method of optimising the pose graph based at least on the predicted place category, in accordance with embodiments of the present disclosure. In some embodiments, method 300 of optimising the pose graph based at least on the predicted place category may be implemented in step 224 of method 200.

According to some embodiments, method 300 may comprise step 348, wherein a representative node, also known as a parent node, is selected for each predicted place category, and all other nodes are designated as child nodes. In some embodiments, the representative node may be selected based on the importance of each node relative to the other nodes within the same predicted place category. Any known ways of defining importance of each node may be employed. In some embodiments, the importance of each node may be determined based on the degree of connectivity of each node. In some embodiments, each node may be ranked according to their degree of connectivity and the highest-ranking node may be selected as the representative node for the predicted place category. Examples of methods that may be used to rank the nodes of each predicted place category include random walk or Markov chains. In some embodiments, selection of a representative node may be carried out by a hierarchy module 416 and/or representative node selection module 448 (see Fig. 4).

According to some embodiments, method 300 may comprise step 356, wherein information from the child nodes of each predicted place category is aggregated to the respective representative node of their precited place category. In some embodiments, aggregation of information may be through any known message passing mechanism. In some embodiments, aggregation of information may be through message passing based on edge connectivity. In some embodiments, edge connectivity may be ignored during aggregation of information or message passing. In some embodiments, aggregation of information or message passing may comprise updating the encoding or embedding of each representative node with information aggregated or received from the child nodes with the same predicted place category. In some embodiments, aggregation of information may be carried out by a hierarchy module 416 and/or aggregation module 456 (see Fig. 4).

According to some embodiments, method 300 may comprise step 364, wherein the representative nodes are optimised. In some embodiments, optimisation of the representative nodes may comprise adjusting the node position, sensor pose, edges, at least one feature vector and/or the predicted place category of the representative node. In some embodiments, optimisation of the representative nodes may be carried out using a neural network. In some embodiments, optimisation of the representative nodes may be carried out using a graph neural network. In some embodiments, optimisation of the representative nodes may be carried out by a representative node optimisation neural network 424 (see Fig. 4).

According to some embodiments, method 300 may comprise step 372, wherein the child nodes are optimised based on their respective representative nodes. In some embodiments, optimisation of the child nodes may comprise adjusting the node position, sensor pose, edges, at least one feature vector and/or the predicted place category of the child nodes. According to some embodiments, optimisation of the child nodes may be carried out by using a residual connection from a pooling layer. In some embodiments, optimisation of the child nodes may be carried out by using a residual connection from the output of pooling neural network 408 (see Fig. 4). In some embodiments, optimising the child nodes based on their respective representative nodes may be carried out using a neural network. In some embodiments, optimising the child nodes based on their respective representative nodes may be carried out using a multi-layer perceptron. In some embodiments, optimising the child nodes based on their respective representative nodes may be carried out by a child optimisation module 432 (see Fig. 4).

Fig. 4 is a functional block diagram of a machine-learning model 400 for generating an annotated optimised pose graph representative of a physical area, in accordance with embodiments of the present disclosure. Elements/modules of the machine-learning model may be, for example, performed by one or more processors. Machine-learning model 400 may be configured to carry out one or more of the steps of method 200 for generating an annotated optimised pose graph representative of a physical area. The machine-learning model 400 may comprise a pooling neural network 408, a hierarchy module 416, a representative node optimisation neural network 424, a child node optimisation module 432, and an annotation module 440. In some embodiments, machine-learning model 400 may receive as input a pose graph 108 representative of a physical area, the pose graph comprising a plurality of nodes and edges between the nodes, each node being associated at least with a sensor pose and at least one feature vector extracted from a corresponding sensor data, and wherein an edge connects pairs of nodes of the plurality of nodes and represents a relative pose. In some embodiments, machine-learning model 400 may generate as output an annotated optimised pose graph 116, wherein each node of the predicted/output optimised pose graph is annotated with a place category label.

According to some embodiments, pooling neural network 408 may be configured to assign each node of a received pose graph to a predicted place category. In some embodiments, pooling neural network 408 may be configured to carry out step 216 of method 200. In some embodiments, pooling neural network 408 may be a multi-layer perceptron. Multi-layer perceptrons will be well known to those skilled in the art, and as such are not discussed in detail herein. In general terms, a multi-layer perceptron comprises an "input layer" having a plurality of input neurons, one or more "hidden layers" each having a plurality of hidden layer neurons, and an "output layer" having a plurality of output neurons. The hidden layer and output layer neurons are each linked to the neurons in the previous layer and each connection between neurons has an associated weight. Other key elements include an optional bias term, activation, and transfer functions. "Knowledge" within the neural network is stored as the connection weights, and non-linearities and complexities of the model are captured by the activation and transfer functions, and by the number of neurons in the hidden layers, respectively.

According to some embodiments, pooling neural network 408 may have an output layer comprising a plurality of neurons with an activation function, wherein the number of neurons in the output layer corresponds to the number of place categories or clusters, and wherein each neuron outputs a probability that an input node belongs to a certain place category. In some embodiments, a softmax layer comprising a softmax function, also known as normalized exponential function, may be used to derive the desired probabilistic outputs for predicted place category. The softmax layer or function is a known tool that maps the range of {z: -∞ ..., ∞} to [0,1] by normalising the input into a probability distribution. Table 1 below illustrates an example of the architecture of pooling neural network 408 with a multi-layer perceptron architecture, wherein k corresponds to the number of place categories.

**Table 1**

| Layer | Input and output size | Number of parameters (weights) | Number of parameters (Biases) |
|---|---|---|---|
| Input layer | 1024, 512 | 524288 | 512 |
| Hidden layer 1 | 512, 256 | 131072 | 256 |
| Output layer | 128, *k* | 256 | *k* |
| Total | 656384 *+ k* | | |

According to some embodiments, the output from pooling neural network 408 may be input into hierarchy module 416. In some embodiments, hierarchy module 416 may be configured to select a representative node for each predicted place category, wherein all other nodes of each predicted place category are designated as child nodes, and aggregate information from child nodes to their respective representative nodes. In some embodiments, hierarchy module 416 may be configured to carry out steps 348 and/or step 356 of method 300. In some embodiments, hierarchy module 416 may be implemented as two modules: representative node selection module 448 configured receive input from pooling neural network 408 and to select a representative node for each place category, wherein all other nodes of each place category are designated as child nodes; and aggregation module 456 configured to receive input from representative node selection module 448 and aggregate information from child nodes to their respective representative node. In some embodiments, representative node selection module 448 may be configured to carry out step 348 of method 300, and aggregation module 456 may be configured to carry out step 356 of method 300.

According to some embodiments, hierarchy module 416 and/or representative node selection module 448 may select a representative node for each predicted place category based on the importance of each node of the received pose graph relative to the other nodes within the same predicted place category. Any known ways of defining importance of each node may be employed. In some embodiments, the importance of each node may be determined based on the degree of connectivity of each node. In some embodiments, each node may be ranked according to their degree of connectivity and the highest-ranking node may be selected as the representative node for the predicted place category. Examples of methods that may be used to rank the nodes of each predicted place category include random walk or Markov chains.

According to some embodiments, hierarchy module 416 and/or aggregation module 456 may aggregate information from child nodes to their respective representative nodes. In some embodiments, aggregation of information may be through any known message passing mechanism. In some embodiments, aggregation of information may be through message passing based on edge connectivity. In some embodiments, edge connectivity may be ignored during aggregation of information or message passing. In some embodiments, aggregation of information or message passing may comprise updating the encoding or embedding of each representative node with information aggregated or received from the child nodes with the same predicted place category.

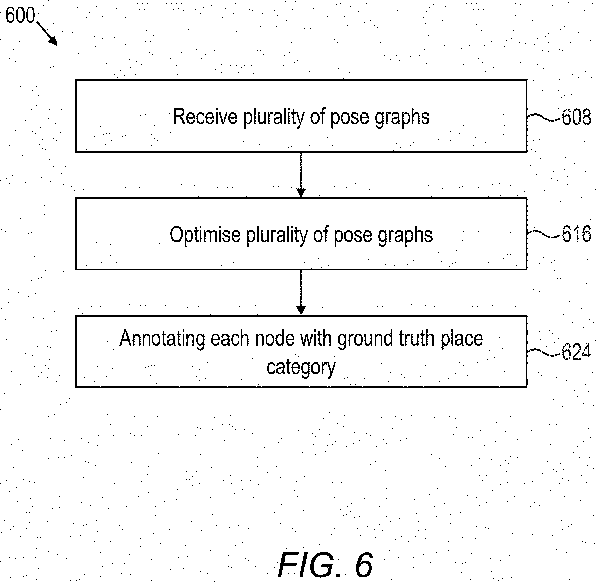

According to some embodiments, representative node optimisation neural network 424 may receive as input the output from hierarchy module 416 and/or aggregation module 456. In some embodiments, pooling neural network 408 may be configured to carry out step 364 of method 300. In some embodiments, representative node optimisation neural network 424 may have a graph neural network (GNN) architecture. Graph neural networks will be well known to those skilled in the art, and as such are not discussed in detail herein. In general terms, a graph neural network comprises one or more hidden graph layers, wherein convolutional operator, recurrent operator, sampling module and skip connection are used to propagate information in each graph layer. In some embodiments, convolution operator, recurrent operator and skip connection operation may be part of a propagation module used to propagate information between nodes so that the aggregated information could capture both feature and topological information. In some embodiments, the convolution operator and recurrent operator may be used to aggregate information from neighbours while the skip connection operation may be used to gather information from historical representations of nodes and mitigate the over-smoothing problem. In some embodiments, the sampling module may be included to conduct propagation, and may be combined with the propagation module. In some embodiments, the pooling module may be used to extract information from nodes where the representations of high-level subgraphs or graphs is required. Table 2 below illustrates an example of the architecture of representative node optimisation neural network 424 with a graph neural network architecture. In general, the node dimensions of the final layer are similar to the node dimensions of a ground truth pose graph (see Fig. 6). In some embodiments, the node dimensions may be maintained across layers. In some embodiments, the node dimensions may be slightly reduced and then increased to the original node dimensions. In some embodiments, the representative node optimisation neural network 424 may receive as input at least the at least one feature vector pertaining to a sensor data encoded in the representative nodes of the pose graph and the edges, and output a relative pose and a predicted place category. In some embodiments, the representative node optimisation neural network 424 may receive as input the absolute pose and the at least one feature vector pertaining to a sensor data encoded in the representative nodes of the pose graph and the edges and output an absolute pose and a predicted place category. In some embodiments, the predicted place category output by the representative node optimisation neural network 424 may be the same as the predicted place category predicted by pooling neural network 408. In some embodiments, the predicted place category output by the representative node optimisation neural network 424 may be differ from the predicted place category predicted by pooling neural network 408.

**Table 2**

| Layer | Input and output size | Number of parameters (weights) | Number of parameters (Biases) |
|---|---|---|---|
| GNN layer 1 | 1024, 1024 | 524288 | 1024 |
| GNN layer 1 | 1024, 1024 | 524288 | 1024 |
| GNN layer 3 | 1024, 1024 | 524288 | 1024 |
| Total | 1572846 | | |

According to some embodiments, child node optimisation module 432 may receive as input the output from representative node optimisation neural network 424. In some embodiments, child node optimisation module 432 may be configured to carry out step 372 of method 200. In some embodiments, child node optimisation module 432 may optimise the child nodes based on a residual connection from a pooling layer. In some embodiments, child node optimisation module 432 may optimise the child nodes based on a residual connection from pooling neural network 408.

According to some embodiments, annotation module 440 may be implemented between pooling neural network 408 and hierarchy module 416, such that the output from pooling neural network 408 may be annotated by annotation module 440 before being input into hierarchy module 415. In some embodiments, annotation module 440 may be implemented after child node optimisation module 432 such that the output from child node optimisation module 432 is annotated to generate annotated optimised pose graph 116.

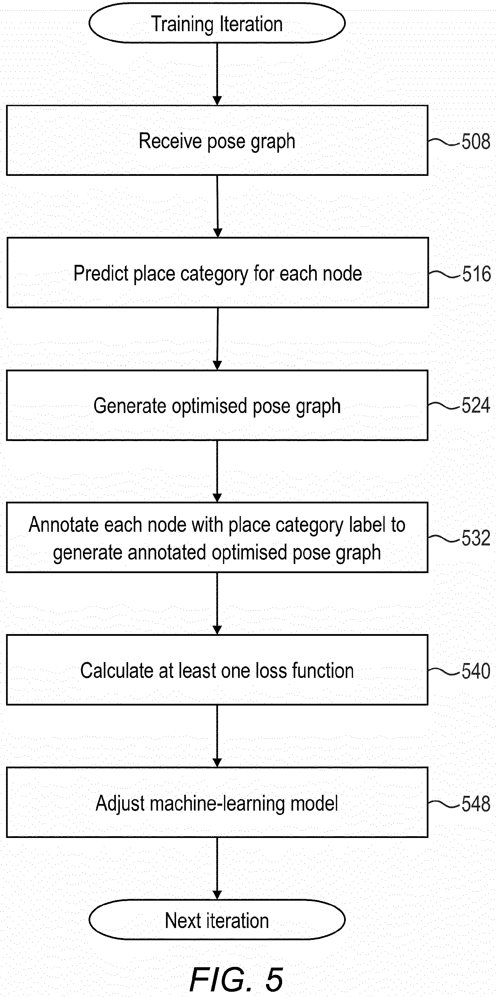

Fig. 5 is a schematic diagram illustrating the main steps to train a machine-learning model 400 for generating an annotated optimised posed graph based on a pose graph, in accordance with embodiments of a present disclosure. In some embodiments, machine-learning model 400 may be trained on a training dataset comprising a plurality of pose graphs and corresponding ground truth pose graphs, wherein the ground truth pose graphs are optimised and each node of the ground truth pose graph is annotated with ground truth place category labels. For example, the training dataset may comprise at least 1000 pose graphs and corresponding ground truth pose graphs split 80-20 into a training and a validation set, wherein each pose graph and corresponding ground truth pose graph may comprise a few hundred nodes. In some embodiments, when training machine-learning model 400, the activation functions may be set to be the commonly used sigmoid activation function or ReLU activation function and the weights may be randomly initialized to numbers between 0.01 and 0.1, while the biases may be randomly initialized to numbers between 0.1 and 0.9. In some embodiments, specific weights may be added for certain ground truth place categories where the training dataset is highly imbalanced. As shown in Fig. 5, an iteration of the training process for a single pose graph commences at step 508 where machine-learning model 400 receives a pose graph comprising a plurality of nodes and edges between the nodes, each node being associated at least with a sensor pose and at least one feature vector extracted from a corresponding sensor data, and wherein an edge connects pairs of nodes of the plurality of nodes and represents a relative pose. In some embodiments, the pose graph may be received through a communication network. In some embodiments, the pose graph may be stored on one or more remote storage devices and the pose graph may be retrieved from such remote storage device, or a cloud storage site, through one or both of wired or wireless connection. It should be appreciated that the machine-learning model 400 may be configured to advantageously receive and process a plurality of pose graphs in parallel.

At step 516, a place category may be predicted for each node based at least on the sensor pose and at least one feature vector associated with such node. In some embodiments, step 516 may be carried out by pooling neural network 408.

At step 524, an optimised pose graph may be generated based at least on the predicted place category. In some embodiments, step 524 may be carried out by hierarchy module 416, representative node selection module 448, aggregation module 456, representative node optimisation neural network 424, child node optimisation module 432, or some combination thereof.

At step 532, each node may be annotated with a place category label corresponding to the predicted place category to generate an annotated optimised pose graph.

At step 540 at least one loss function that enforces consistency between the generated annotated optimised pose graph and the ground truth pose graph is calculated. In some embodiments, the at least one loss function may be selected from the group comprising a categorisation loss function, a pose error function, and a triplet loss function. In some embodiments, the at least one loss function is a cumulative loss function comprising a categorisation loss function, a pose error function, and a triplet loss function.

According to some embodiments, categorisation loss function may be calculated based on the predicted place category. Categorisation loss function may be supervised or unsupervised. Supervised categorisation loss function, also known as classification loss, includes cross entropy loss function based on the cross-entropy loss between the predicted place category and the ground truth place labels. Unsupervised categorisation loss, also known as clustering loss, includes k-means loss disclosed in "Towards K-means-friendly Spaces: Simultaneous Deep Learning and Clustering" by Yang *et. al.,* cluster assignment hardening loss disclosed in "Unsupervised deep embedding for clustering analysis" by Xie *et. al.,* agglomerative clustering loss disclosed in "Joint unsupervised learning of deep representations and image clusters" by Yang *et. al.,* and spectral clustering loss disclosed in "Spectral Clustering with Graph Neural Networks for Graph Pooling" by Bianchi *et. al.*

According to some embodiments, pose error function may be calculated based on the difference between sensor pose associated with the nodes of the generated annotated optimized pose graph pose graph and sensor pose associated with the nodes of the ground truth pose graph. In some embodiments, pose error function may comprise a position loss and an orientation loss. In some embodiments, position loss may be calculated by computing an Euclidean distance between the position of the sensor pose of the nodes of the generated annotated optimized pose graph and the position of the sensor pose of nodes of the ground truth pose graph. In some embodiments, orientation loss may be calculated by considering the orientations of the sensor poses as quaternions, with the difference between the orientation of nodes of the generated annotated optimized pose graph and orientation of nodes of the ground truth pose graph obtained by Δ q=q2q1-1, wherein Hamilton product is used for multiplying the orientations. In some embodiments, the pose error function is summed over all available nodes.

According to some embodiments, triplet loss function may be calculated based on the difference between similar feature vectors and dissimilar feature vectors. In particular, a triplet loss function creates a criterion that measures a triplet loss given input tensors aaa, ppp, and nnn (representing anchor, positive, and negative examples, respectively), and a nonnegative, real-valued function (or distance function) used to compute the relationship between the anchor and positive example (or positive distance) and the anchor and negative example (or negative distance). In some embodiments, an input node under consideration may be taken as the anchor, a node from the same place category may be taken as a positive example, and a node from a different place category may be taken as a negative example.

At step 548, the machine-learning model 400 may be adjusted using the at least one loss function determined in step 548. The machine-learning model 400 may be adjusted by backpropagating the at least one loss function determined in step 548 to update the weights and biases using an AdamOptimizer. In some embodiments, machine-learning model 400 may be trained with a learning rate of 0.001 and weight decay of 0.0005.

According to some embodiments, the machine-learning model 400 may be trained from scratch for 50 to 100 epochs, although the number of epochs may vary depending on the size of the dataset and/or the size of machine-learning model 400.

Fig. 6 is a schematic illustration of a method of generating a training dataset for training a machine-learning model 400 for generating an annotated optimised pose graph based on a pose graph, in accordance with embodiments of a present disclosure. According to some embodiments, method 600 of generating a training dataset for training a machine-learning model 400 for generating an annotated optimised posed graph based on a pose graph may commence at step 608 wherein a plurality of pose graphs is received, wherein each pose graph comprises a plurality of nodes and edges between the nodes, each node being associated at least with a sensor pose and at least one feature vector extracted from a corresponding sensor data, and wherein an edge connects pairs of nodes of the plurality of nodes and represents a relative pose. In some embodiments, the plurality of pose graphs may be generated from a dataset comprising a plurality of image frames captured from a plurality of scenes with pose annotation in each frame. For example, the dataset may comprise 500-1000 image frames with pose annotation captured of 7 scenes, and all the annotated image frames or a subset of the annotated image frames may be used to generate the plurality of pose graphs. In some embodiments, the plurality of pose graphs may be based on a dataset that accurately measures the ground truth pose of a mobile agent and/or sensor using an external scanner, GPS, or any external localisation algorithm on a prebuild map of the environment. Examples of datasets that may be employed include the 7-Scenes dataset available at https://www.microsoft.com/en-us/research/project/rgb-d-dataset-7-scenes/, the Hilti-Oxford Dataset available at https://www.hilti-challenge.com/dataset-2022.html, the KITTI dataset available at https://www.cvlibs.net/datasets/kitti/. It is contemplated that any other suitable datasets may be used to generate the plurality of pose graphs. In some embodiments, the plurality of pose graphs may be received through a communication network. In some embodiments, the pose graph may be stored on one or more remote storage devices and the pose graph may be retrieved from such remote storage device, or a cloud storage site, through one or both of wired or wireless connection.

According to some embodiments, method 600 may comprise generating ground truth pose graphs for each of the plurality of pose graphs, which comprises step 616 wherein each of the plurality of pose graphs is optimised and step 624 wherein each node is annotated with a ground truth place category label. In particular, the training dataset used to train machine-learning model 400 comprises the plurality of pose graphs received in step 608, and the ground truth pose graphs generated in step 624.

According to some embodiments, step 616 may comprise optimising each of the plurality of pose graphs using a non-linear least-squares formulation to find new configurations of the nodes in the input pose graph that minimises the squared error introduced by the constraints.

According to some embodiments, step 624 may comprise using manual annotation, a neural network or infrastructure data. An example of a neural network that may be used to generate place category labels is the neural network disclosed in "Robust Place Categorization with Deep Domain Generalization" by Mancini *et. al.,* wherein an example of the architecture of the neural network may be found at least in Section III and Figure 2, and wherein an example of the training of the neural network may be found at least in Section IV. It is contemplated that any other suitable architecture and/or training method may be employed. In some embodiments, the neural network may be trained on a labelled dataset comprising images captured of indoor, outdoor, and environment scenes. Examples of datasets that may be used to train the neural network include the Places365 dataset available at http://places2.csail.mit.edu/ and any of the Fukuoka datasets for place categorisation available at http://robotics.ait.kyushu-u.ac.jp/kyushu_datasets/ depending on the desired sensor input (e.g., Lidar, cameras, depth, RGBD sensors). It is contemplated that any other suitable dataset may be used. For example, where infrastructure data comprising information on landmarks and/or place categories is stored in the form of a graph, each pose graph may be combined with infrastructure based on GPS information of the nodes or a least square fit to match the pose graph with the infrastructure data.

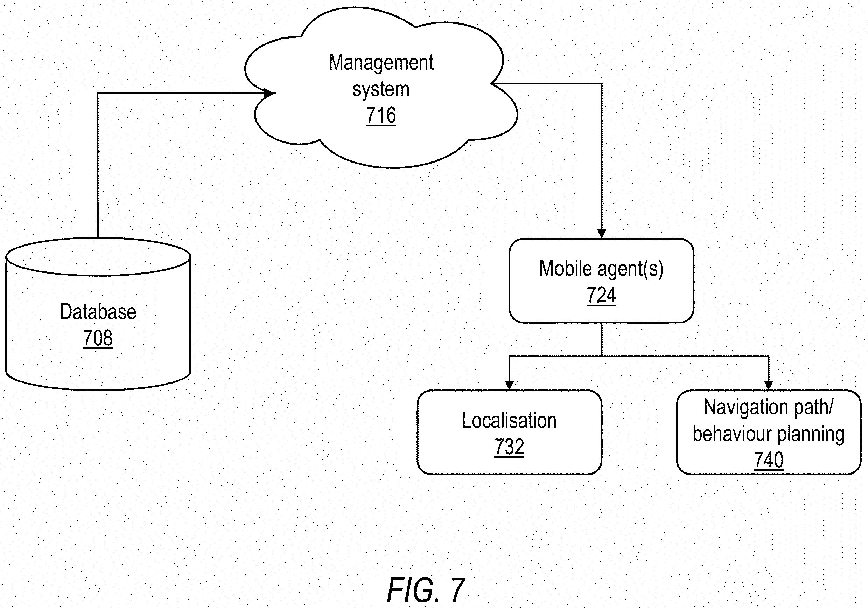

Fig. 7 is a schematic illustration of the use of the annotated optimised pose graph by one or more mobile agents, in accordance with embodiments of the present disclosure. An annotated optimised pose graph 116 generated according to method 200 may be used in various applications, including place categorisation; topological mapping; and autonomous navigation. For example, the annotated optimised pose graph 116 may be used for place categorisation based on the place category label. For example, the annotated optimised pose graph 116 may be used for topological mapping by either creating hierarchy-based place categories or using the representative nodes to generate a topological map which may then be used for topological localisation.

According to some embodiments, a plurality of annotated optimised pose graphs 116 generated using method 200 may be stored in a database 708. In some embodiments, the plurality of annotated optimised pose graphs 116 stored in database 708 may be retrieved by a management system 716 which controls one or more mobile agents 724. The management system 716 may communicate with the one or more mobile agents 724 by manner of one or both of wired or wireless coupling or communication. In some embodiments, the management system 716 may be positioned on the one or more mobile agents 724. In some embodiments, the management system 716 may be positioned away from the one or more mobile agents 724. In some embodiments, the one or more mobile agents 724 may be a robot, cobot, and/or vehicle. In some embodiments, the one or more mobile agents 724 may use the hierarchical relationship of nodes of annotated optimised pose graph 116 for localisation. For example, the annotated optimised pose graph may be used for topological localisation, where metric or fine localisation is done at each node, as well as rough odometry-based localisation along the edges. In some embodiments, the one or more mobile agents 724 may use the place category labels of annotated optimised pose graph 116 for navigation path and/or behaviour planning 740. For example, navigation behaviour or navigation policy of a mobile agent may be modified based on the place category information contained in the annotated optimised pose graph.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

## Claims

1. A computer-implemented method of generating an annotated optimised pose graph representative of a physical area for autonomously navigating a vehicle based on the annotated optimised pose graph as a representation of a map, the method comprising:
receiving a pose graph representative of a physical area, the pose graph comprising a plurality of nodes and edges between the nodes, each node being associated at least with a sensor pose and at least one feature vector extracted from a corresponding sensor data, and wherein an edge connects pairs of nodes of the plurality of nodes and represents a relative pose;
predicting a place category for each node based at least on the sensor pose and at least one feature vector associated with such node;
optimising the pose graph based at least on the predicted place category; and
annotating each node with a place category label corresponding to the predicted place category to generate an annotated optimised pose graph,
**characterized in that** optimising the pose graph comprises for each predicted place category:
selecting a representative node, wherein all other nodes are designated as child nodes;
aggregating information from the child nodes to the selected representative node, wherein the information from the child nodes comprises the sensor pose and the at least one feature vector associated with each child node, and wherein aggregating the information comprises at least one of concatenating and learned embedding the sensor pose and the at least one feature vector of each child node;
optimising the representative nodes, preferably using a neural network and more preferably using a graph neural network; and
optimising the child nodes based on their respective representative nodes, preferably using a neural network and more preferably using a multi-layer perceptron.

2. The computer-implemented method of claim 1, wherein the received pose graph is generated by the steps of:
extracting at least one feature vector from sensor data capturing the physical area, preferably using a convolutional neural network, wherein the sensor data is generated by a sensor; and
encoding each node with the extracted at least one feature vector and sensor pose.

3. The computer-implemented method of any of the preceding claims, wherein predicting a place category for each node comprises using a neural network and preferably using a multi-layer perceptron.

4. A computer-readable storage medium having stored therein, a machine-learning model configured to perform the method of any of the preceding claims.

5. The computer-readable storage medium of claim 4, wherein the machine-learning model comprises:
a pooling neural network, preferably a multi-layer perceptron, configured to assign each node to a predicted place category;
a hierarchy module configured to select a representative node for each predicted place category, wherein all other nodes of each predicted place category are designated as child nodes, and aggregate information from child nodes to their respective representative nodes;
a representative node optimisation neural network, preferably a graph neural network configured to optimise the selected representative nodes;
a child node optimisation neural network, preferably a multi-layer perceptron, configured to optimise the child nodes based on their representative node; and
a node annotation module configured to annotate each node with a place category label corresponding to their predicted place category.

6. The computer-readable storage medium of claim 5, wherein the hierarchy module comprises:
a representative node selection module configured to select a representative node for each place category, wherein all other nodes of each place category are designated as child nodes; and
an aggregation module configured to aggregate information from child nodes to their respective representative node.

7. A computer-implemented method of training the machine-learning model of any one of claims 4 to 6, for generating an annotated optimised posed graph based on a pose graph comprising a plurality of nodes and edges between the nodes, each node being associated at least with a sensor pose and at least one feature vector extracted from a corresponding sensor data, and wherein an edge connects pairs of nodes of the plurality of nodes and represents a relative posethe method comprising:
receiving a training dataset comprising a plurality of pose graphs and corresponding ground truth pose graphs, wherein the ground truth pose graphs are optimised and each node of the ground truth pose graph is annotated with ground truth place category labels;
training a machine-learning model using the training dataset by:
predicting a place category for each node based at least on the sensor pose and at least one feature vector associated with such node;
generating an optimised pose graph based at least on the predicted place category;
annotating each node with a place category label corresponding to the predicted place category to generate an annotated optimised pose graph; and
adjusting the machine-learning model based on at least one loss function that enforces consistency between the generated annotated optimised pose graph and the ground truth pose graph,
wherein the at least one loss function is a cumulative loss function comprising a categorisation loss function, a pose error function, and a triplet loss function.

8. A computer-implemented method of generating a training dataset for the machine-learning model of any one of claims 4 to 6, comprising:
receiving a plurality of pose graphs, wherein each pose graph comprises a plurality of nodes and edges between the nodes, each node being associated at least with a sensor pose and at least one feature vector extracted from a corresponding sensor data, and wherein an edge connects pairs of nodes of the plurality of nodes and represents a relative pose;
generating ground truth pose graphs for each of the plurality of pose graphs by:
optimising the plurality of pose graphs, preferably using a non-linear least-squares formula; and
annotating each node with a ground truth place category label, preferably based on manual annotation, a neural network, or infrastructure data,
wherein the training dataset comprises the received plurality of pose graphs and the generated ground truth pose graphs.

9. A training dataset for a machine-learning model generated using the method of claim 8.

10. Use of an annotated optimised pose graph generated according to the method of any one of claims 1 to 3 for at least one of: place categorisation; topological mapping; and autonomous navigation.

11. A data processing system comprising a sensor and means for performing the steps of a computer-implemented method according to any one of claims 1 to 3, and/or 7 to 8, wherein the data processing system is preferably a mobile agent.

12. A computer program, a machine-readable storage medium, or a data carrier signal that comprises instructions, that upon execution on a data processing device and/or control unit, cause the data processing device and/or control unit to perform the steps of a computer-implemented method according to any one of claims 1 to 3, and/or 7 to 8.

## Patentansprüche

1. Computerimplementiertes Verfahren zum Erzeugen eines annotierten optimierten Posengraphs, der einen physischen Bereich repräsentiert, zum autonomen Navigieren eines Fahrzeugs basierend auf dem annotierten optimierten Posengraph als Repräsentation einer Karte, wobei das Verfahren umfasst:
Empfangen eines Posengraphs, der einen physischen Bereich repräsentiert,
wobei der Posengraph eine Vielzahl von Knoten und Kanten zwischen den Knoten umfasst, wobei jeder Knoten zumindest mit einer Sensorpose und zumindest einem Merkmalsvektor, der aus entsprechenden Sensordaten extrahiert wurde, assoziiert ist, und wobei eine Kante Paare von Knoten der Vielzahl von Knoten verbindet und eine Relativpose repräsentiert;
Vorhersagen einer Ortskategorie für jeden Knoten basierend zumindest auf der Sensorpose und zumindest einem Merkmalsvektor, der mit einem solchen Knoten assoziiert ist;
Optimieren des Posengraphs basierend zumindest auf der vorhergesagten Ortskategorie; und
Annotieren jedes Knotens mit einem Ortskategorielabel, das der vorhergesagten Ortskategorie entspricht, um einen annotierten optimierten Posengraph zu erzeugen,
**dadurch gekennzeichnet, dass** das Optimieren des Posengraphs für jede vorhergesagte Ortskategorie umfasst:
Auswählen eines Repräsentativknotens, wobei alle anderen Knoten als Kindknoten bezeichnet werden;
Aggregieren von Informationen von den Kindknoten zu dem ausgewählten Repräsentativknoten, wobei die Informationen von den Kindknoten die Sensorpose und den zumindest einen Merkmalsvektor umfassen, der mit jedem Kindknoten assoziiert ist, und wobei das Aggregieren der Informationen zumindest eines von Verketten und gelernte Einbetten der Sensorpose und des zumindest einen Merkmalsvektors jedes Kindknotens umfasst;
Optimieren der Repräsentativknoten, vorzugsweise unter Verwendung eines neuronalen Netzwerks und mehr bevorzugt unter Verwendung eines Graph-Neural-Networks; und
Optimieren der Kindknoten basierend auf ihren jeweiligen Repräsentativknoten, vorzugsweise unter Verwendung eines neuronalen Netzwerks und mehr bevorzugt unter Verwendung eines mehrschichtigen Perzeptrons.

2. Computerimplementiertes Verfahren nach Anspruch 1, wobei der empfangene Posengraph durch die Schritte erzeugt wird:
Extrahieren zumindest eines Merkmalsvektors aus Sensordaten, die den physischen Bereich erfassen, vorzugsweise unter Verwendung eines neuronalen Faltungsnetzwerks, wobei die Sensordaten durch einen Sensor erzeugt werden; und
Codieren jedes Knotens mit dem extrahierten zumindest einen Merkmalsvektor und der Sensorpose.

3. Computerimplementiertes Verfahren nach einem der vorhergehenden Ansprüche, wobei das Vorhersagen einer Ortskategorie für jeden Knoten die Verwendung eines neuronalen Netzwerks und vorzugsweise die Verwendung eines mehrschichtigen Perzeptrons umfasst.

4. Computerlesbares Speichermedium, auf dem ein Maschinenlernmodell gespeichert ist, das zum Durchführen des Verfahrens nach einem der vorhergehenden Ansprüche ausgelegt ist.

5. Computerlesbares Speichermedium nach Anspruch **4,** wobei das Maschinenlernmodell umfasst:
ein neuronales Poolingnetzwerk, vorzugsweise ein mehrschichtiges Perzeptron, das zum Zuweisen jedes Knotens zu einer vorhergesagten Ortskategorie ausgelegt ist;
ein Hierarchiemodul, das zum Auswählen eines Repräsentativknotens für jede vorhergesagte Ortskategorie ausgelegt ist, wobei alle anderen Knoten jeder vorhergesagten Ortskategorie als Kindknoten bezeichnet werden, und zum Aggregieren von Informationen von Kindknoten zu ihren jeweiligen Repräsentativknoten;
ein neuronales Repräsentativknotenoptimierungsnetzwerk, vorzugsweise ein Graph-Neural-Network, das zum Optimieren der ausgewählten Repräsentativknoten ausgelegt ist;
ein neuronales Kindknotenoptimierungsnetzwerk, vorzugsweise ein mehrschichtiges Perzeptron, das zum Optimieren der Kindknoten basierend auf ihrem Repräsentativknoten ausgelegt ist; und
ein Knotenannotationsmodul, das zum Annotieren jedes Knotens mit einem Ortskategorielabel, das ihrer vorhergesagten Ortskategorie entspricht, ausgelegt ist.

6. Computerlesbares Speichermedium nach Anspruch 5, wobei das Hierarchiemodul umfasst:
ein Repräsentativknotenauswahlmodul, das zum Auswählen eines Repräsentativknotens für jede Ortskategorie ausgelegt ist, wobei alle anderen Knoten jeder Ortskategorie als Kindknoten bezeichnet werden; und
ein Aggregationsmodul, das zum Aggregieren von Informationen von Kindknoten zu ihrem jeweiligen Repräsentativknoten ausgelegt ist.

7. Computerimplementiertes Verfahren zum Trainieren des Maschinenlernmodells nach einem der Ansprüche 4 bis 6 zum Erzeugen eines annotierten optimierten Posengraphs basierend auf einem Posengraph, der eine Vielzahl von Knoten und Kanten zwischen den Knoten umfasst, wobei jeder Knoten zumindest mit einer Sensorpose und zumindest einem Merkmalsvektor, der aus entsprechenden Sensordaten extrahiert wurde, assoziiert ist, und wobei eine Kante Paare von Knoten der Vielzahl von Knoten verbindet und eine Relativpose repräsentiert, wobei das Verfahren umfasst:
Empfangen eines Trainingsdatensatzes, der eine Vielzahl von Posengraphen und entsprechende Grundwahrheit-Posengraphen umfasst, wobei die Grundwahrheit-Posengraphen optimiert sind und jeder Knoten des Grundwahrheit-Posengraphs mit Grundwahrheit-Ortskategorielabeln annotiert ist;
Trainieren eines Maschinenlernmodells unter Verwendung des Trainingsdatensatzes durch:
Vorhersagen einer Ortskategorie für jeden Knoten basierend zumindest auf der Sensorpose und zumindest einem Merkmalsvektor, der mit einem solchen Knoten assoziiert ist;
Erzeugen eines optimierten Posengraphs basierend zumindest auf der vorhergesagten Ortskategorie;
Annotieren jedes Knotens mit einem Ortskategorielabel, das der vorhergesagten Ortskategorie entspricht, um einen annotierten optimierten Posengraph zu erzeugen; und
Anpassen des Maschinenlernmodells basierend auf zumindest einer Verlustfunktion, die Konsistenz zwischen dem erzeugten annotierten optimierten Posengraph und dem Grundwahrheit-Posengraph erzwingt,
wobei die zumindest eine Verlustfunktion eine kumulative Verlustfunktion ist, die eine Kategorisierungsverlustfunktion, eine Posenfehlerfunktion und eine Triplet-Verlustfunktion umfasst.

8. Computerimplementiertes Verfahren zum Erzeugen eines Trainingsdatensatzes für das Maschinenlernmodell nach einem der Ansprüche 4 bis 6, umfassend:
Empfangen einer Vielzahl von Posengraphen, wobei jeder Posengraph eine Vielzahl von Knoten und Kanten zwischen den Knoten umfasst, wobei jeder Knoten zumindest mit einer Sensorpose und zumindest einem Merkmalsvektor, der aus entsprechenden Sensordaten extrahiert wurde, assoziiert ist, und wobei eine Kante Paare von Knoten der Vielzahl von Knoten verbindet und eine Relativpose repräsentiert;
Erzeugen von Grundwahrheit-Posengraphen für jeden der Vielzahl von Posengraphen durch:
Optimieren der Vielzahl von Posengraphen, vorzugsweise unter Verwendung einer nichtlinearen Kleinste-Quadrate-Formel; und
Annotieren jedes Knotens mit einem Grundwahrheit-Ortskategorielabel, vorzugsweise basierend auf manueller Annotation, einem neuronalen Netzwerk oder Infrastrukturdaten,
wobei der Trainingsdatensatz die empfangene Vielzahl von Posengraphen und die erzeugten Grundwahrheit-Posengraphen umfasst.

9. Trainingsdatensatz für ein Maschinenlernmodell, erzeugt unter Verwendung des Verfahrens nach Anspruch 8.

10. Verwendung eines annotierten optimierten Posengraphs, der gemäß dem Verfahren nach einem der Ansprüche 1 bis 3 erzeugt wurde, für zumindest eines von: Ortskategorisierung; topologische Kartierung; und autonome Navigation.

11. Datenverarbeitungssystem, umfassend einen Sensor und Mittel zum Durchführen der Schritte eines computerimplementierten Verfahrens nach einem der Ansprüche 1 bis 3 und/oder 7 bis 8, wobei das Datenverarbeitungssystem vorzugsweise ein mobiler Agent ist.

12. Computerprogramm, maschinenlesbares Speichermedium oder Datenträgersignal, das Anweisungen umfasst, die bei Ausführung auf einer Datenverarbeitungsvorrichtung und/oder Steuereinheit die Datenverarbeitungsvorrichtung und/oder Steuereinheit veranlassen, die Schritte eines computerimplementierten Verfahrens nach einem der Ansprüche 1 bis 3 und/oder 7 bis 8 durchzuführen.

## Revendications

1. Procédé mis en œuvre par ordinateur pour générer un graphe de pose optimisé annoté représentant une surface physique pour la navigation autonome d'un véhicule basée sur le graphe de pose optimisé annoté en tant que représentation d'une carte, le procédé consistant à :
recevoir un graphe de pose représentant une surface physique, le graphe de pose comprenant une pluralité de nœuds et de bords entre les nœuds, chaque nœud étant associé au moins à une pose de capteur et à au moins un vecteur caractéristique extrait de données de capteur correspondantes, et dans lequel un bord relie des paires de nœuds de la pluralité de nœuds et représente une pose relative ;
prédire une catégorie de place pour chaque nœud basée au moins sur la pose de capteur et au moins un vecteur caractéristique associé à un tel nœud ;
optimiser le graphe de pose basé au moins sur la catégorie de place prédite ; et
annoter chaque nœud avec une étiquette de catégorie de place correspondant à la catégorie de place prédite pour générer un graphe de pose optimisé annoté, **caractérisé en ce que** l'optimisation du graphe de pose consiste à, pour chaque catégorie de place prédite :
sélectionner un nœud représentatif, dans lequel tous les autres nœuds sont désignés comme nœuds enfants ;
agréger les informations des nœuds enfants vers le nœud représentatif sélectionné, dans lequel les informations des nœuds enfants comprennent la pose de capteur et l'au moins un vecteur caractéristique associé à chaque nœud enfant, et dans lequel l'agrégation des informations comprend au moins l'une parmi la concaténation et l'intégration apprise de la pose de capteur et de l'au moins un vecteur caractéristique de chaque nœud enfant ;
optimiser les nœuds représentatifs, de préférence à l'aide d'un réseau neuronal et plus préférentiellement à l'aide d'un réseau neuronal graphique ; et
optimiser les nœuds enfants basés sur leurs nœuds représentatifs respectifs, de préférence à l'aide d'un réseau neuronal et plus préférentiellement à l'aide d'un perceptron multicouche.

2. Procédé mis en œuvre par ordinateur selon la revendication 1, dans lequel le graphe de pose reçu est généré par les étapes suivantes consistant à :
extraire au moins un vecteur caractéristique des données de capteur capturant la surface physique, de préférence à l'aide d'un réseau neuronal convolutif, dans lequel les données de capteur sont générées par un capteur ; et
coder chaque nœud à l'aide de l'au moins un vecteur caractéristique et de la pose de capteur extraits.

3. Procédé mis en œuvre par ordinateur selon l'une quelconque des revendications précédentes, dans lequel la prédiction d'une catégorie de place pour chaque nœud comprend l'utilisation d'un réseau neuronal et de préférence l'utilisation d'un perceptron multicouche.

4. Support d'enregistrement lisible par ordinateur dans lequel est enregistré un modèle d'apprentissage automatique configuré pour mettre en œuvre le procédé selon l'une quelconque des revendications précédentes.

5. Support d'enregistrement lisible par ordinateur selon la revendication 4, dans lequel le modèle d'apprentissage automatique comprend :
un réseau neuronal de regroupement, de préférence un perceptron multicouche, configuré pour attribuer chaque nœud à une catégorie de place prédite ;
un module de hiérarchie configuré pour sélectionner un nœud représentatif pour chaque catégorie de place prédite, dans lequel tous les autres nœuds de chaque catégorie de place prédite sont désignés comme des nœuds enfants, et agréger les informations des nœuds enfants vers leurs nœuds représentatifs respectifs ;
un réseau neuronal d'optimisation de nœuds représentatifs, de préférence un réseau neuronal graphique configuré pour optimiser les nœuds représentatifs sélectionnés ;
un réseau neuronal d'optimisation de nœuds enfants, de préférence un perceptron multicouche, configuré pour optimiser les nœuds enfants sur la base de leur nœud représentatif ; et
un module d'annotation de nœuds configuré pour annoter chaque nœud avec une étiquette de catégorie de place correspondant à leur catégorie de place prédite.

6. Support d'enregistrement lisible par ordinateur selon la revendication 5, dans lequel le modèle de hiérarchie comprend :
un module de sélection de nœuds représentatifs configuré pour sélectionner un nœud représentatif pour chaque catégorie de place, dans lequel tous les autres nœuds de chaque catégorie de place sont désignés comme des nœuds enfants ; et
un module d'agrégation configuré pour agréger les informations des nœuds enfants vers leurs nœuds représentatifs respectifs.

7. Procédé mis en œuvre par ordinateur d'entraînement du modèle d'apprentissage automatique selon l'une quelconque des revendications 4 à 6, pour générer un graphe de pose optimisé annoté basé sur un graphe de pose comprenant une pluralité de nœuds et de bords entre les nœuds, chaque nœud étant associé au moins à une pose de capteur et à au moins un vecteur caractéristique extrait de données de capteur correspondantes, et dans lequel un bord relie des paires de nœuds de la pluralité de nœuds et représente une pose relative, le procédé consistant à :
recevoir un ensemble de données d'entraînement comprenant une pluralité de graphes de pose et des graphes de pose de réalité de terrain correspondants, dans lequel les graphes de pose de réalité de terrain sont optimisés et chaque nœud du graphe de pose de réalité de terrain est annoté avec des étiquettes de catégories de places de réalité de terrain ;
entraîner un modèle d'apprentissage automatique à l'aide de l'ensemble de données d'entraînement par la mise en œuvre des étapes consistant à :
prédire une catégorie de place pour chaque nœud basée au moins sur la pose de capteur et au moins un vecteur caractéristique associé à un tel nœud ;
générer un graphe de pose optimisé basé au moins sur la catégorie de place prédite ;
annoter chaque nœud avec une étiquette de catégorie de place correspondant à la catégorie de place prédite pour générer un graphe de pose optimisé annoté ; et ajuster le modèle d'apprentissage automatique basé au moins sur une fonction de perte qui assure la cohérence entre le graphe de pose optimisé annoté généré et le graphe de pose de réalité de terrain,
dans lequel l'au moins une fonction de perte est une fonction de perte cumulative comprenant une fonction de perte de catégorisation, une fonction d'erreur de pose et une fonction de perte de triplet.

8. Procédé mis en œuvre par ordinateur de génération d'un ensemble de données d'entraînement pour le modèle d'apprentissage automatique selon l'une quelconque des revendications 4 à 6, consistant à :
recevoir une pluralité de graphes de pose, dans lequel chaque graphe de pose comprend une pluralité de nœuds et de bords entre les nœuds, chaque nœud étant associé au moins à une pose de capteur et à au moins un vecteur caractéristique extrait de données de capteur correspondantes, et dans lequel un bord relie des paires de nœuds de la pluralité de nœuds et représente une pose relative ;
générer des graphes de pose de réalité de terrain pour chacun de la pluralité de graphes de pose par la mise en œuvre des étapes consistant à :
optimiser la pluralité de graphes de pose, de préférence à l'aide d'une formule des moindres carrés non linéaire ; et
annoter chaque nœud avec une étiquette de catégorie de place de réalité de terrain, de préférence basée sur une annotation manuelle, un réseau neuronal, ou des données d'infrastructure,
dans lequel l'ensemble de données d'entraînement comprend la pluralité de graphes de pose reçus et les graphes de pose de réalité de terrain générés.

9. Ensemble de données d'entraînement pour un modèle d'apprentissage automatique généré à l'aide du procédé selon la revendication 8.

10. Utilisation d'un graphe de pose optimisé annoté généré conformément au procédé selon l'une quelconque des revendications 1 à 3 pour au moins l'une parmi : une catégorisation de place ; un mappage topologique ; et une navigation autonome.

11. Système de traitement de données comprenant un capteur et des moyens pour réaliser les étapes d'un procédé mis en œuvre par ordinateur selon l'une quelconque des revendications 1 à 3, et/ou 7 à 8, dans lequel le système de traitement de données est de préférence un agent mobile.

12. Programme d'ordinateur, support d'enregistrement lisible par machine, ou signal de support de données qui comprend des instructions, qui, lors de leur exécution sur un dispositif de traitement de données et/ou une unité de commande, amènent le dispositif de traitement de données et/ou l'unité de commande à réaliser les étapes d'un procédé mis en œuvre par ordinateur selon l'une quelconque des revendications 1 à 3, et/ou 7 à 8.
